# EUROPEAN PATENT APPLICATION

(11) **EP 4 574 480 A1**
(43) Date of publication of application: **25.06.2025**
(21) Application number: 23870640.2
(22) Date of filing: 22.09.2023
(51) Int. Cl.: B60H 1/14, B60L 58/26

(54) **VEHICLE HEAT PUMP SYSTEM, THERMAL MANAGEMENT METHOD AND VEHICLE**

(30) Priority: 29.09.2022 CN 202211198502
(71) Applicant: Deepal Automobile Technology Co., Ltd., Chongqing 401133 (CN)
(72) Inventor: SONG, Nuan, Chongqing 401135 (CN); CHEN, Zongshan, Chongqing 401135 (CN); XU, Liqing, Chongqing 401135 (CN)
(74) Representative: DREISS Patentanwälte PartG mbB
(86) International application number: PCT/CN2023/120792
(87) International publication number: WO 2024/067409

(57) **Abstract**

The present invention provides a vehicle heat pump system, a thermal management method and a vehicle. The method comprises: when it is determined that a passenger compartment has a first preset level of heating requirement but does not require waste heat of an electric derive, storing the waste heat of the electric drive by utilizing a heat capacity effect of a battery pack, and heating the passenger compartment by using a refrigerant; and when it is determined that the passenger compartment has a second preset level of heating requirement and requires the waste heat of the electric drive, delivering to the refrigerant the waste heat of the electric drive stored in the battery pack, and waste heat currently generated by the electric drive, so as to heat the passenger compartment by using the refrigerant.

## Description

### CROSS-REFERENCE TO RELATED APPLICATION

This application is based on and claims priority to Chinese patent application No. 202211198502.0 filed on September 29, 2022, the entire contents of which are incorporated herein by reference.

### TECHNICAL FIELD

The present disclosure relates to the field of thermal management and control of new energy vehicles, and in particular to a vehicle heat pump system, a thermal management method, and a vehicle.

### BACKGROUND

New energy vehicles have defects of low energy efficiency ratio and high power consumption for warming in a low-temperature environment, which leads to users complaining about a large decline of endurance mileage in the low-temperature environment. To improve the energy efficiency ratio for warming and optimize energy utilization under a limited vehicle space and limited energy, a lot of new technologies have been developed for vehicle thermal management, such as heat pump technology, utilization of residual heat of an electric drive, heat utilization, and recovery of residual heat of a passenger compartment. However, each of these technologies needs to take into account demands of different parties, improve an energy efficiency ratio of a system, and reduce power consumption of thermal management, resulting in a complex system.

### SUMMARY

The present disclosure provides a vehicle heat pump system, a thermal management method, and a vehicle, which realizes recovery and utilization of residual heat of an electric drive using a heat capacity effect of a battery pack.

Technical solutions of the present disclosure are as follows.

The present disclosure provides a thermal management method for a vehicle heat pump system. The thermal management method includes: in response to determining that a passenger compartment has a warming demand of a first preset level but does not require residual heat of an electric drive, storing the residual heat of the electric drive using a heat capacity effect of a battery pack, and heating the passenger compartment using a refrigerant; and in response to determining that the passenger compartment has a warming demand of a second preset level and requires the residual heat of the electric drive, transferring the residual heat of the electric drive stored in the battery pack and residual heat currently generated by the electric drive to the refrigerant, and heating the passenger compartment using the refrigerant. The warming demand of the second preset level is higher than the warming demand of the first preset level.

Preferably, the thermal management method further includes: in response to determining that the passenger compartment has a cooling demand, storing excess cooling energy from the refrigerant using the heat capacity effect of the battery pack, and cooling the passenger compartment using the refrigerant.

Preferably, the thermal management method further includes: in response to determining that the battery pack has a heating need, heating the battery pack using the refrigerant.

Preferably, the thermal management method further includes: in response to determining that the passenger compartment has a warming demand of a third preset level but does not require the residual heat of the electric drive, storing the residual heat of the electric drive using the heat capacity effect of the battery pack, and heating the passenger compartment using a heater. The warming demand of the third preset level is higher than the warming demand of the first preset level and the warming demand of the second preset level.

Preferably, the in response to determining that the passenger compartment has the warming demand of the first preset level but does not require the residual heat of the electric drive, storing the residual heat of the electric drive using the heat capacity effect of the battery pack, and heating the passenger compartment using the refrigerant includes: forming a first passenger compartment warming circuit, an electric drive and battery coolant circuit, and a first refrigerant circuit; and thermally coupling the first refrigerant circuit to the first passenger compartment warming circuit, exchanging heat generated by the first refrigerant circuit to the first passenger compartment warming circuit to heat the passenger compartment, and transferring, via the electric drive and battery coolant circuit, the residual heat of the electric drive to the battery pack for storage.

Preferably, the in response to determining that the passenger compartment has the warming demand of the second preset level and requires the residual heat of the electric drive, transferring the residual heat of the electric drive stored in the battery pack and the residual heat currently generated by the electric drive to the refrigerant, and heating the passenger compartment using the refrigerant includes: forming a first passenger compartment warming circuit, an electric drive and battery coolant circuit, a first refrigerant circuit, and a second refrigerant circuit; thermally coupling the first refrigerant circuit to the first passenger compartment warming circuit, thermally coupling the electric drive and battery coolant circuit to the second refrigerant circuit, and connecting the first refrigerant circuit and the second refrigerant circuit; and exchanging, via the electric drive and battery coolant circuit and the second refrigerant circuit, the residual heat stored in the battery pack with the residual heat currently generated by the electric drive, transferring to the first refrigerant circuit via the second refrigerant circuit, and exchanging, via the first refrigerant circuit, heat generated by the first refrigerant circuit and heat absorbed by the first refrigerant circuit to the first passenger compartment warming circuit, for heating the passenger compartment.

Preferably, the in response to determining that the passenger compartment has the cooling demand, storing the excess cooling energy from the refrigerant using the heat capacity effect of the battery pack, and cooling the passenger compartment using the refrigerant includes: forming an electric drive coolant circuit, a first refrigerant circuit, a second refrigerant circuit, and a battery cooling circuit; connecting the first refrigerant circuit and the second refrigerant circuit, thermally coupling the second refrigerant circuit to the battery cooling circuit, and thermally coupling the first refrigerant circuit to the electric drive coolant circuit; and exchanging heat generated by the first refrigerant circuit to the electric drive coolant circuit to enable the refrigerant to be cooled, cooling the passenger compartment using a part of the cooled refrigerant, dissipating, via the electric drive coolant circuit, the heat exchanged to the electric drive coolant circuit, and transferring the other part of the cooled refrigerant to the second refrigerant circuit, and exchanging, via the second refrigerant circuit, the other part of the cooled refrigerant to the battery cooling circuit, for storing the excess cooling energy by the battery pack.

Preferably, the in response to determining that the battery pack has the heating need, heating the battery pack using the refrigerant includes: forming a battery heating circuit, a first passenger compartment warming circuit, and a first refrigerant circuit; and connecting the first passenger compartment warming circuit and the battery heating circuit, thermally coupling the first passenger compartment warming circuit to the first refrigerant circuit, and exchanging heat generated by the first refrigerant circuit to the first passenger compartment warming circuit, and transferring the heat generated by the first refrigerant to the battery heating circuit, for heating the battery.

Preferably, the in response to determining that the passenger compartment has the warming demand of the third preset level but does not require the residual heat of the electric drive, storing the residual heat of the electric drive using the heat capacity effect of the battery pack, and heating the passenger compartment using the heater includes: forming a second passenger compartment warming circuit and an electric drive and battery coolant circuit, heating, via the second passenger compartment warming circuit, the passenger compartment using heat generated by the second passenger compartment warming circuit, and transferring, via the electric drive and battery coolant circuit, the residual heat of the electric drive to the battery pack for storage.

The present disclosure provides a vehicle heat pump system for implementing the thermal management method described above. The vehicle heat pump system includes: a first passenger compartment warming circuit, a second passenger compartment warming circuit, a battery coolant circuit, an electric drive coolant circuit, an electric drive and battery coolant circuit, a first refrigerant circuit, and a second refrigerant circuit. The first passenger compartment warming circuit is coupled to the first refrigerant circuit and/or the second refrigerant circuit via a water-cooled condenser, the battery coolant circuit is coupled to the second refrigerant circuit via a battery cooler, the electric drive coolant circuit is coupled to the first refrigerant circuit and/or the second refrigerant circuit via the water-cooled condenser, and the electric drive and battery coolant circuit is coupled to the second refrigerant circuit via the battery cooler. The battery coolant circuit and the electric drive coolant circuit are allowed to coexist, the battery coolant circuit and the electric drive coolant circuit are not allowed to coexist with the electric drive and battery coolant circuit, the first refrigerant circuit and the second refrigerant circuit share a refrigerant passage of the water-cooled condenser, the electric drive coolant circuit and the passenger compartment warming circuit share a coolant passage of the water-cooled condenser, and the first passenger compartment warming circuit and the second passenger compartment warming circuit are not allowed to coexist.

Preferably, the vehicle heat pump system further includes: a battery heating circuit connected to the first passenger compartment warming circuit or the second passenger compartment warming circuit.

Preferably, the vehicle heat pump system further includes a multi-way valve, a multi-inlet and one-outlet valve), a multi-way proportional valve. The first passenger compartment warming circuit, the second passenger compartment warming circuit, the battery heating circuit, the battery coolant circuit, the electric drive coolant circuit, and the electric drive and battery coolant circuit are formed by switching control of a plurality of internal ports of the multi-way valve, switching control of a plurality of internal valve ports of the multi-inlet and one-outlet valve, switching control of a plurality of outlets of the multi-way proportional valve, and on-off control of an electric drive water pump, a heating water pump, and a battery water pump.

Preferably, the multi-way valve has 10 ports from port A to port J, the multi-inlet and one-outlet valve has 4 valve ports from port K to port N, the port N being a water outlet, and the multi-way proportional valve has 3 valve ports from port O to port Q; the battery coolant circuit includes a battery pack, the battery water pump, a coolant passage of the battery cooler, port D to port H of the multi-way valve, and a check valve; and a water outlet of the battery pack is in communication with the port D of the multi-way valve, the port D and the port E of the multi-way valve are sequentially connected, the port E of the multi-way valve is in communication with the port H of the multi-way valve, the port H of the multi-way valve is in communication with a water inlet of the battery water pump, the coolant passage of the battery cooler is in communication with a water outlet of the battery water pump and the port G of the multi-way valve, the port G of the multi-way valve is in communication with the port F of the multi-way valve, the port F of the multi-way valve is in communication with a water inlet of the check valve, and the water inlet of the check valve is in communication with a water inlet of the battery pack.

Preferably, the electric drive coolant circuit includes the electric drive water pump, the electric drive, the valve port L and the valve port O of the multi-inlet and one-outlet valve, the heating water pump, the coolant passage of the water-cooled condenser, the port A to the port C and the port I of the multi-way valve, and a heat dissipation device. A water inlet of the electric drive water pump is in communication with the port C of the multi-way valve, a water outlet of the electric drive water pump is in communication with a water inlet of the electric drive, a water outlet of the electric drive is in communication with the valve port K of the multi-inlet and one-outlet valve, the valve port N of the multi-inlet and one-outlet valve is in communication with a water inlet of the heating water pump, the coolant passage of the water-cooled condenser is connected between and in communication with a water outlet of the heating water pump and the port I of the multi-way valve, the port I of the multi-way valve is in communication with the port A of the multi-way valve, the port A of the multi-way valve is in communication with a water inlet of the heat dissipation device, a water outlet of the heat dissipation device is in communication with the port B of the multi-way valve, and the port B of the multi-way valve is in communication with the port C of the multi-way valve.

Preferably, the electric drive and battery coolant circuit includes the battery pack, the battery water pump, the coolant passage of the battery cooler, the port C to the port H and the port J of the multi-way valve, the check valve, the electric drive water pump, and the electric drive. The water outlet of the battery pack is in communication with the port D of the multi-way valve, the port D and the port E of the multi-way valve are sequentially connected, the port E of the multi-way valve is in communication with the port C of the multi-way valve, a water inlet of the electric drive water pump is in communication with the port C of the multi-way valve, a water outlet of the electric drive water pump is in communication with a water inlet of the electric drive, a water outlet of the electric drive is in communication with the port J of the multi-way valve, the port J of the multi-way valve is in communication with the port H of the multi-way valve, the port H of the multi-way valve is in communication with the water inlet of the battery water pump, the coolant passage of the battery cooler is in communication with the water outlet of the battery water pump and the port G of the multi-way valve, the port G of the multi-way valve is in communication with the port F of the multi-way valve, the port F of the multi-way valve is in communication with the water inlet of the check valve, and the water inlet of the check valve is in communication with the water inlet of the battery pack.

Preferably, the first passenger compartment warming circuit includes the heating water pump, the coolant passage of the water-cooled condenser, a warm air core body, the valve port O and the valve port Q of the multi-way proportional valve, and the valve port M and the valve port N of the multi-inlet and one-outlet valve. The valve port N of the multi-inlet and one-outlet valve is in communication with a water inlet of the heating water pump, the coolant passage of the water-cooled condenser is connected between and in communication with a water outlet of the heating water pump and a water inlet of the warm air core body. A water outlet of the warm air core body is in communication with the valve port O of the multi-way proportional valve. The valve port O of the multi-way proportional valve is in communication with the valve port Q of the multi-way proportional valve. The valve port Q of the multi-way proportional valve is in communication with the valve port M of the multi-inlet and one-outlet valve, and the valve port M of the multi-inlet and one-outlet valve is in communication with the valve port N of the multi-inlet and one-outlet valve. The second passenger compartment warming circuit includes the first passenger compartment warming circuit and an electric hydronic heater. The coolant passage of the water-cooled condenser is connected between and in communication with the water outlet of the heating water pump and a water inlet of the electric hydronic heater, and the water inlet of the electric hydronic heater is in communication with the water inlet of the warm air core body.

Preferably, the battery heating circuit includes the valve port P and the valve port Q of the multi-way proportional valve, the valve port M and the valve port O of the multi-inlet and one-outlet valve, and the battery pack; and the valve port O of the multi-inlet and one-outlet valve is in communication with the water inlet of the heating water pump, the water outlet of the warm air core body is in communication with the valve port P of the multi-way proportional valve, the valve port P of the multi-way proportional valve is in communication with the valve port Q of the multi-way proportional valve, the valve port Q of the multi-way proportional valve is in communication with the water inlet of the battery pack, the water outlet of the battery pack is in communication with the valve port M of the multi-inlet and one-outlet valve, and the valve port M of the multi-inlet and one-outlet valve is in communication with the valve port O of the multi-inlet and one-outlet valve.

Preferably, the first refrigerant circuit includes a compressor, the refrigerant passage of the water-cooled condenser, a first electronic expansion valve, an evaporator core body, and a gas-liquid separator that are sequentially connected to form a closed-loop circuit; and the second refrigerant circuit includes the compressor, the refrigerant passage of the water-cooled condenser, a second electronic expansion valve, a refrigerant passage of the battery cooler, and the gas-liquid separator that are sequentially connected to form a closed-loop circuit.

The present disclosure further provides a vehicle including the vehicle heat pump system described above.

The present disclosure provides the following advantageous effects.

In the present disclosure, the battery pack is used as a heat capacity body. When the residual heat of the electric drive is not required for warming the passenger compartment, the heat capacity effect of the battery pack is used to store the residual heat of the electric drive. When the residual heat of the electric drive is required for warming the passenger compartment, residual heat stored in the battery pack and the residual heat of the electric drive are exchanged to the refrigerant through heat exchange, and then exchanged with the coolant in the first passenger compartment warming circuit to heat the passenger compartment using the residual heat of the electric drive. While the residual heat of the electric drive is used to warm the passenger compartment, the battery pack can also store cooling energy simultaneously. In addition, when the battery pack is cooled, the refrigerant can be used to cool the battery pack while storing the cooling energy. The stored cooling energy can be used to cool the battery pack during fast charging.

### BRIEF DESCRIPTION OF DRAWINGS

FIG. 1 is a schematic diagram of a vehicle heat pump system according to an embodiment of the present disclosure.
FIG. 2 is a schematic diagram showing an operation principle of warming using a vehicle heat pump system according to an embodiment of the present disclosure.
FIG. 3 is a schematic diagram showing an operation principle of heating a battery pack using a vehicle heat pump system according to an embodiment of the present disclosure.
FIG. 4 is a schematic diagram showing an operation principle of cooling using a vehicle heat pump system according to an embodiment of the present disclosure.
FIG. 5 is a schematic diagram showing an operation principle of realizing heat dissipation of an electric drive using a vehicle heat pump system according to an embodiment of the present disclosure.
FIG. 6 is a flowchart illustrating a method for controlling a heat pump system according to an embodiment of the present disclosure.

### Description of reference numerals of the accompanying drawings:

1-compressor; 2-water-cooled condenser; 3-first electronic expansion valve; 4-evaporator core body; 5-second electronic expansion valve; 6-battery cooler; 7-gas-liquid separator; 8-electric hydronic heater; 9-warm air core body; 10-multi-way proportional valve; 11-multi-inlet and one-outlet valve; 12-electric drive water pump; 13-electric drive; 14-multi-way valve; 15-heating water pump; 16-water storage bottle; 17-battery water pump; 18-check valve; 19-battery package; 20-heat dissipation device.

### DESCRIPTION OF THE EMBODIMENTS

According to an embodiment, a thermal management method for a vehicle heat pump system is provided. The thermal management method includes: in response to determining that a passenger compartment has a warming demand of a first preset level but does not require residual heat of an electric drive, storing the residual heat of the electric drive using a heat capacity effect of a battery pack, and heating the passenger compartment using a refrigerant.

Whether the passenger compartment has the warming demand is an instruction actively input by a user. Whether the passenger compartment requires the residual heat of the electric drive for heating is determined by a level of the warming demand of the passenger compartment. Specifically, when the passenger compartment has the warming demand of the first preset level, the passenger compartment requires warming at a relatively low temperature, and thus heat provided by the refrigerant is sufficient to heat the passenger compartment. In this case, it is determined that no residual heat of the electric drive is required.

A specific principle of heating the passenger compartment using the refrigerant is as follows.

A first passenger compartment warming circuit, an electric drive and battery coolant circuit, and a first refrigerant circuit are formed. The first refrigerant circuit is thermally coupled to the first passenger compartment warming circuit. Heat generated by the first refrigerant circuit is exchanged to the first passenger compartment warming circuit to heat the passenger compartment. The residual heat of the electric drive is transferred, via the electric drive and battery coolant circuit, to the battery pack for storage. In this case, the residual heat generated by the electric drive is transferred to the battery pack via the electric drive and battery coolant circuit. With the heat capacity effect of the battery pack, this part of residual heat can be recovered and stored. Also, through heat exchange of the heat generated in the first refrigerant circuit with the first passenger compartment warming circuit, heat of the refrigerant is absorbed by the first passenger compartment warming circuit, and transferred to a warm air core body to heat the passenger compartment.

In response to determining that the passenger compartment has a warming demand of a second preset level and requires the residual heat of the electric drive, the residual heat of the electric drive stored in the battery pack and residual heat currently generated by the electric drive are transferred to the refrigerant, and the passenger compartment is heated using the refrigerant.

When the passenger compartment has the warming demand of the second preset level, and the warming demand of the first preset level is lower than the warming demand of the second preset level, the passenger compartment requires heating at a relatively high temperature, and thus the heat provided by the refrigerant is insufficient to heat the passenger compartment. In this case, it is determined that the residual heat of the electric drive is required. The residual heat previously stored in the battery pack and the residual heat currently generated by the electric drive are exchanged to the refrigerant through heat exchange to increase an amount of heat provided by the refrigerant to the passenger compartment.

A specific principle of heating the passenger compartment using the refrigerant is as follows. A first passenger compartment warming circuit, an electric drive and battery coolant circuit, a first refrigerant circuit, and a second refrigerant circuit are formed. The first refrigerant circuit is thermally coupled to the first passenger compartment warming circuit. The electric drive and battery coolant circuit is thermally coupled to the second refrigerant circuit. The first refrigerant circuit and the second refrigerant circuit are connected. The residual heat stored in the battery pack and the residual heat currently generated by the electric drive are exchanged via the electric drive and battery coolant circuit and the second refrigerant circuit and transferred, via the second refrigerant circuit, to the first refrigerant circuit. Heat generated by the first refrigerant circuit and heat absorbed by the first refrigerant circuit are exchanged, via the first refrigerant circuit, to the first passenger compartment warming circuit to heat the passenger compartment.

In response to determining that the passenger compartment has a cooling demand, excess cooling energy from the refrigerant is stored using the heat capacity effect of the battery pack, and the passenger compartment is cooled using the refrigerant. A specific principle of cooling the passenger compartment using the refrigerant is as follows. An electric drive coolant circuit, a first refrigerant circuit, a second refrigerant circuit, and a battery cooling circuit are formed. The first refrigerant circuit and the second refrigerant circuit are connected. The second refrigerant circuit is thermally coupled to the battery cooling circuit. The first refrigerant circuit is thermally coupled to the electric drive coolant circuit. Heat generated by the first refrigerant circuit is exchanged to the electric drive coolant circuit to enable the refrigerant to be cooled. The passenger compartment is cooled using a part of the cooled refrigerant. The heat exchanged to the electric drive coolant circuit is dissipated by the electric drive coolant circuit. The other part of the cooled refrigerant is enabled to be transferred to the second refrigerant circuit and to be exchanged, via the second refrigerant circuit, to the battery cooling circuit to store the excess cooling energy by the battery pack. When the passenger compartment is cooled, cooling energy provided by a compressor operating at a lowest rotational speed is still higher than cooling energy required by the passenger compartment, and thus the excess cooling energy is recovered and stored using the heat capacity effect of the battery pack.

In response to determining that the battery pack has a heating need, the battery pack is heated using the refrigerant. A specific principle of heating the battery pack using the refrigerant is as follows. A battery heating circuit, a first passenger compartment warming circuit, and a first refrigerant circuit are formed. The first passenger compartment warming circuit and the battery heating circuit are connected. The first passenger compartment warming circuit is thermally coupled to the first refrigerant circuit. Heat generated by the first refrigerant circuit is exchanged to the first passenger compartment warming circuit and transferred to the battery heating circuit to heat the battery.

In this embodiment, while using the refrigerant to heat the battery pack, a process of heating the battery pack is accompanied by a process of heating and dehumidifying the passenger compartment, considering that the first passenger compartment warming circuit absorbs heat from the first refrigerant circuit.

In response to determining that the passenger compartment has a warming demand of a third preset level but does not require the residual heat of the electric drive, the residual heat of the electric drive is stored using the heat capacity effect of the battery pack, and the passenger compartment is heated using a heater. In this case, the passenger compartment has the warming demand of the third preset level, which is a demand of a highest level. Therefore, the refrigerant and the residual heat of the electric drive are insufficient to heat the passenger compartment, and thus the heater is directly turned on to heat the passenger compartment.

A specific principle of heating the passenger compartment using the heater is as follows. A second passenger compartment warming circuit and an electric drive and battery coolant circuit are formed. The passenger compartment is heated by the second passenger compartment warming circuit using heat generated by the second passenger compartment warming circuit. The residual heat of the electric drive is transferred, via the electric drive and battery coolant circuit, to the battery pack for storage.

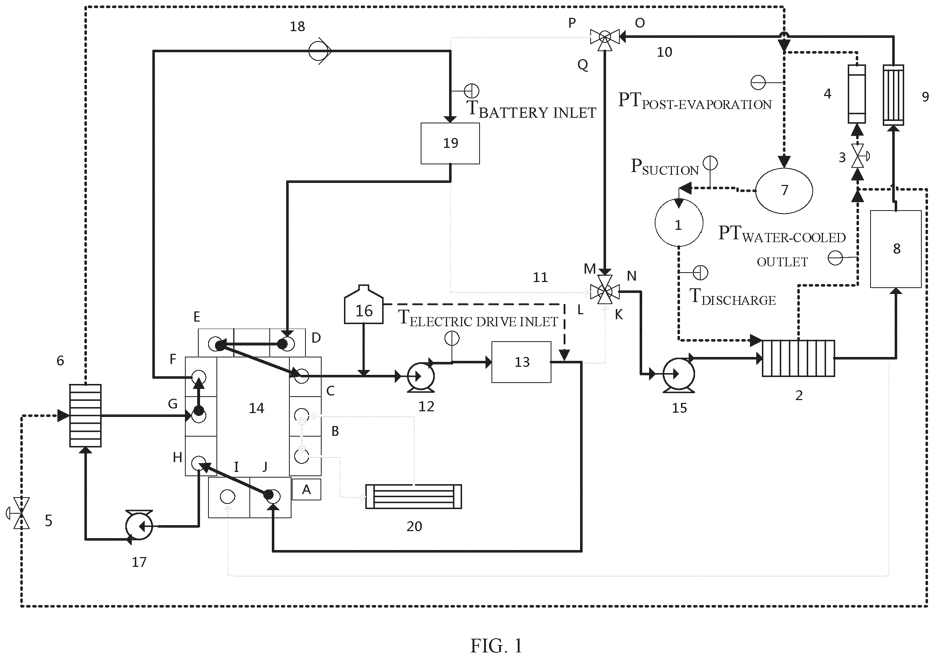

To realize the above thermal management method for the vehicle heat pump system, a vehicle heat pump system is provided according to an embodiment of the present disclosure. As illustrated in FIG. 1, the vehicle heat pump system includes a battery heating circuit, a first passenger compartment warming circuit, a second passenger compartment warming circuit, a battery coolant circuit, an electric drive coolant circuit, an electric drive and battery coolant circuit, a first refrigerant circuit, and a second refrigerant circuit. The battery heating circuit is connected to the passenger compartment warming circuit. The first passenger compartment warming circuit is coupled to the first refrigerant circuit and/or the second refrigerant circuit via a water-cooled condenser 2. The battery coolant circuit is coupled to the second refrigerant circuit via a battery cooler 6. The electric drive coolant circuit is coupled to the first refrigerant circuit and/or the second refrigerant circuit via the water-cooled condenser 2. The battery pack 19 and the electric drive coolant circuit are coupled to the second refrigerant circuit via the battery cooler 6. The battery coolant circuit and the electric drive coolant circuit are allowed to coexist. The battery coolant circuit and the electric drive coolant circuit are not allowed to coexist with the electric drive and battery coolant circuit. The first passenger compartment warming circuit and the second passenger compartment warming circuit are not allowed to coexist. The first refrigerant circuit and the second refrigerant circuit share a refrigerant passage of the water-cooled condenser 2. The electric drive coolant circuit and the passenger compartment warming circuit share a coolant passage of the water-cooled condenser 2.

To form the above battery heating circuit, the first passenger compartment warming circuit, the second passenger compartment warming circuit, the battery coolant circuit, the electric drive coolant circuit, the electric drive and battery coolant circuit, a multi-way valve 14 having a plurality of ports, a multi-inlet and one-outlet valve 11 having a plurality of inlets and one outlet, and a multi-way proportional valve 10 having one inlet and a plurality of outlets need to be used.

Specifically, as illustrated in FIG. 1, the multi-way valve 14 has 10 ports from port A to port J, the multi-inlet and one-outlet valve 11 has 4 valve ports from port K to port N, the port N being a water outlet, and the multi-way proportional valve 10 has 3 valve ports from port O to port Q. In this embodiment, the multi-way valve 14 may be designed with more ports as desired. The multi-way valve 14 may be a relevant product which has been disclosed in the related art.

To form the above battery heating circuit, the valve port P of the multi-way proportional valve 10 and the valve port L of the multi-inlet and one-outlet valve 11 need to be connected between and in communication with a water inlet of the battery pack 19 and a water outlet of the battery pack 19. When the valve port P of the multi-way proportional valve 10 and the valve port L of the multi-inlet and one-outlet valve 11 are closed, heating of the battery pack 19 cannot be realized.

The above first passenger compartment warming circuit includes the heating water pump 15, the coolant passage of the water-cooled condenser 2, a warm air core body 9, the valve port O and the valve port Q of the multi-way proportional valve 10, and the valve port M and the valve port N of the multi-inlet and one-outlet valve 11. The valve port N of the multi-inlet and one-outlet valve 11 is in communication with a water inlet of the heating water pump 15. The coolant passage of the water-cooled condenser 2 is connected between and in communication with a water outlet of the heating water pump 15 and a water inlet of the warm air core body 9. A water outlet of the warm air core body 9 is in communication with the valve port O of the multi-way proportional valve 10. The valve port O of the multi-way proportional valve 10 is in communication with the valve port Q of the multi-way proportional valve 10. The valve port Q of the multi-way proportional valve 10 is in communication with the valve port M of the multi-inlet and one-outlet valve 11. The valve port M of the multi-inlet and one-outlet valve 11 is in communication with the valve port N of the multi-inlet and one-outlet valve 11. The second passenger compartment warming circuit includes the first passenger compartment warming circuit and an electric hydronic heater 8. The coolant passage of the water-cooled condenser 2 is connected between and in communication with the water outlet of the heating water pump 15 and a water inlet of the electric hydronic heater 8. The water inlet of the electric hydronic heater 8 is in communication with the water inlet of the warm air core body 9.

The first passenger compartment warming circuit and the battery heating circuit are connected or disconnected through controlling the valve ports of the multi-inlet and one-outlet valve 11 and the valve ports of the multi-way proportional valve 10.

In this embodiment, the electric drive and battery coolant circuit includes the battery pack 19, the battery water pump 17, a coolant passage of the battery cooler 6, the port C to the port H and the port J of the multi-way valve 14, the check valve 18, the electric drive water pump 12, and the electric drive 13. The water outlet of the battery pack 19 is in communication with the port D of the multi-way valve 14. The port D and the port E of the multi-way valve 14 are sequentially connected. The port E of the multi-way valve 14 is in communication with the port C of the multi-way valve 14. A water inlet of the electric drive water pump 12 is in communication with the port C of the multi-way valve 14. A water outlet of the electric drive water pump 12 is in communication with a water inlet of the electric drive 13. A water outlet of the electric drive 13 is in communication with the port J of the multi-way valve 14. The port J of the multi-way valve 14 is in communication with the port H of the multi-way valve 14. The port H of the multi-way valve 14 is in communication with the water inlet of the battery water pump 17. The coolant passage of the battery cooler 6 is in communication with the water outlet of the battery water pump 17 and the port G of the multi-way valve 14. The port G of the multi-way valve 14 is in communication with the port F of the multi-way valve 14. The port F of the multi-way valve 14 is in communication with the water inlet of the check valve 18. The water inlet of the check valve 18 is in communication with the water inlet of the battery pack 19.

The electric drive coolant circuit includes the electric drive water pump 12, the electric drive 13, the valve port L and the valve port O of the multi-inlet and one-outlet valve 11, the heating water pump 15, the coolant passage of the water-cooled condenser 2, the port A to the port C and the port I of the multi-way valve 14, and a heat dissipation device 20. A water inlet of the electric drive water pump 12 is in communication with the port C of the multi-way valve 14. A water outlet of the electric drive water pump 12 is in communication with a water inlet of the electric drive 13. A water outlet of the electric drive 13 is in communication with the valve port K of the multi-inlet and one-outlet valve 11. The valve port N of the multi-inlet and one-outlet valve 11 is in communication with a water inlet of the heating water pump 15. The coolant passage of the water-cooled condenser 2 is connected between and in communication with a water outlet of the heating water pump 15 and the port I of the multi-way valve 14. The port I of the multi-way valve 14 is in communication with the port A of the multi-way valve 14. The port A of the multi-way valve 14 is in communication with a water inlet of the heat dissipation device 20. A water outlet of the heat dissipation device 20 is in communication with the port B of the multi-way valve 14. The port B of the multi-way valve 14 is in communication with the port C of the multi-way valve 14.

The electric drive 13 may also be designed with a water storage bottle 16 to provide a required cooling medium.

The battery coolant circuit includes a battery pack 19, the battery water pump 17, a coolant passage of the battery cooler 6, port D to port H of the multi-way valve 14, and a check valve 18. A water outlet of the battery pack 19 is in communication with the port D of the multi-way valve 14. The port D and the port E of the multi-way valve 14 are sequentially connected. The port E of the multi-way valve 14 is in communication with the port H of the multi-way valve 14. The port H of the multi-way valve 14 is in communication with a water inlet of the battery water pump 17. The coolant passage of the battery cooler 6 is in communication with a water outlet of the battery water pump 17 and the port G of the multi-way valve 14. The port G of the multi-way valve 14 is in communication with the port F of the multi-way valve 14. The port F of the multi-way valve 14 is in communication with a water inlet of the check valve 18. The water inlet of the check valve 18 is in communication with a water inlet of the battery pack 19.

The above electric drive and battery coolant circuit are not allowed to coexist with the electric drive coolant circuit and the battery coolant circuit, while the battery coolant circuit and the electric drive coolant circuit are allowed to coexist.

To form the above electric drive and battery coolant circuit, it is necessary to turn on the electric drive water pump 12 and the battery water pump 17, bring the port I of the multi-way valve 14 to be in communication with the port K of the multi-way valve 14, bring the port E of the multi-way valve 14 to be in communication with the port C of the multi-way valve 14, bring the port G of the multi-way valve 14 to be in communication with the port H of the multi-way valve 14, and close the valve port L and the valve port K of the multi-inlet and one-outlet valve 11.

To form the above electric drive coolant circuit, it is necessary to open the valve port L of the multi-inlet and one-outlet valve 11, turn on the heating water pump 15, bring the port I of the multi-way valve 14 to be in communication with the port A of the multi-way valve 14, and bring the port B of the multi-way valve 14 to be in communication with the port C of the multi-way valve 14.

To form the above battery coolant circuit, it is necessary to turn on the battery water pump 17, bring the port H of the multi-way valve 14 to be in communication with the port E of the multi-way valve 14, bring the port G of the multi-way valve 14 to be in communication with the port F of the multi-way valve 14, and close the valve port L of the multi-inlet and one-outlet valve 11.

As a result, the above three circuits are formed through controlling the multi-way valve 14, the multi-inlet and one-outlet valve 11, the heating water pump 15, and the electric drive water pump 12.

In addition, according to this embodiment, the first refrigerant circuit includes a compressor 1, the refrigerant passage of the water-cooled condenser 2, a first electronic expansion valve 3, an evaporator core body 4, and a gas-liquid separator 7 that are sequentially connected to form a closed-loop circuit; and the second refrigerant circuit includes the compressor 1, the refrigerant passage of the water-cooled condenser 2, a second electronic expansion valve 5, a refrigerant passage of the battery cooler 6, and the gas-liquid separator 7 that are sequentially connected to form a closed-loop circuit.

During a formation of the first refrigerant circuit, the compressor 1 and the first electronic expansion valve 3 need to be turned on. During a formation of the second refrigerant circuit, the compressor 1 and the second electronic expansion valve 5 need to be turned on. The first refrigerant circuit and the second refrigerant circuit may exist simultaneously as desired.

As a result, for the above heat pump system according to this embodiment, the required circuits as described above can be formed through on-off control of the battery water pump 17, the electric drive water pump 12, the heating water pump 15, the first electronic expansion valve 3, the second electronic expansion valve 5, the compressor 1, and t the electric hydronic heater 8 and valve port control of the multi-way valve 14, the multi-way proportional valve 10, and the multi-inlet and one-outlet valve 11.

On a basis of the above vehicle heat pump system, to use the heat capacity effect of the battery pack 19, the following operations can be performed according to this embodiment.

When a user demand is the warming demand of the first preset level and an ambient temperature is within a preset temperature range (the residual heat of the electric drive is not required in this case), actions A, B1, and C are executed. Action A is to turn on the electric drive and battery coolant circuit. Action B1 is to turn on the first passenger compartment warming circuit. Action C is to turn on the first refrigerant circuit.

When the user demand is the warming demand of the second preset level and the ambient temperature is within the preset temperature range (the residual heat of the electric drive is required in this case), actions A, B1, C, and D are executed. Action D is to turn on the second refrigerant circuit.

When the user demand is the cooling demand of the passenger compartment, whether allowable power of the whole vehicle is greater than or equal to requested cooling power is determined.

When the allowable power of the whole vehicle is greater than or equal to the requested cooling power, actions C and E are executed. Action E is to turn on the electric drive coolant circuit.

In a process of executing actions C and E, when the battery pack 19 has a cooling and cooling energy storage demand, actions D and F are executed. Action F is to turn on the battery coolant circuit.

When the user demand is the warming demand of the third preset level and the ambient temperature is within the preset temperature range (the residual heat of the electric drive is not required in this case), actions B2 and A are executed. Action B2 is to turn on the second passenger compartment warming circuit.

A demand temperature for the warming demand of the third preset level is higher than that for the warming demand of the first preset level.

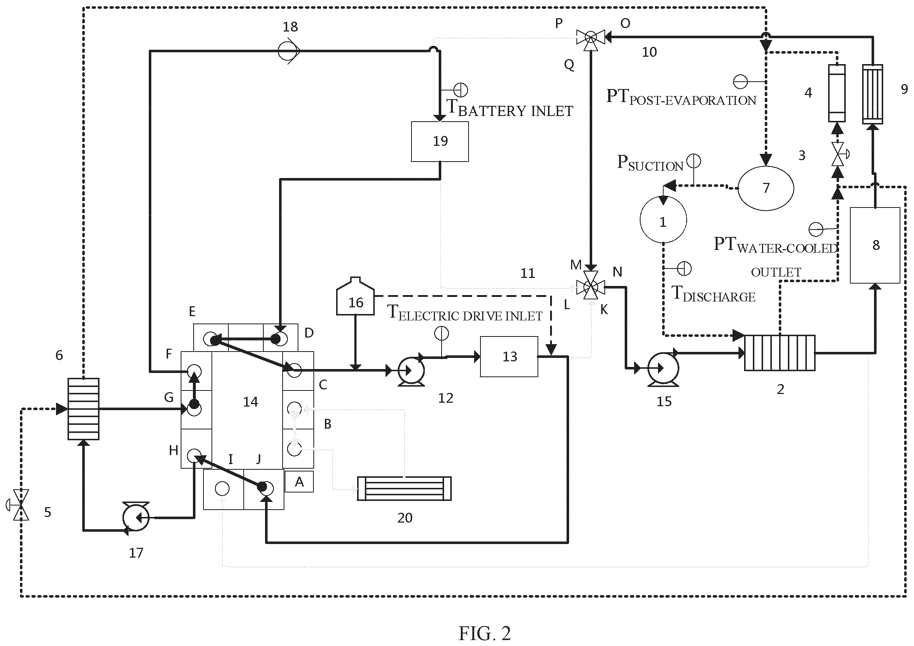

In combination with FIG. 2, there are several ways to heat the passenger compartment when the user demand is the warming demand of the passenger compartment. The first way is to use the electric hydronic heater 8 to heat the coolant (i.e., the warming demand of the passenger compartment is the warming demand of the third preset level). The second way is to use heat exchange between the refrigerant and the coolant at the water-cooled condenser 2 to heat the coolant (i.e., the warming demand of the passenger compartment is the warming demand of the first preset level). The third is to use heat exchange between the refrigerant and the residual heat of the electric drive 13 and heat stored in the battery pack 19 at the water-cooled condenser 2 to heat the coolant (i.e., the warming demand of the passenger compartment is the warming demand of the second preset level). In practice, the way is chosen based on the warming demand of the user.

Specifically, in this embodiment, when the user has the warming demand of the first preset level, the second way is adopted to heat the passenger compartment. When the user has the warming demand of the second preset level, the third way is adopted to heat the passenger compartment. When the user has the warming demand of the third preset level, the first way is adopted to heat the passenger compartment. The warming demand of each preset level corresponds to a specific heating temperature range.

In combination with FIG. 2, in this embodiment, when the warming demand of the user is the warming demand of the first preset level, actions A, B1, and C are executed. Specific control steps for executing actions A, B1, and C are to: control the heating water pump 15, the electric drive water pump 12, the battery water pump 17, the first electronic expansion valve 3, and the compressor 1 to be turned on, control the port H of the multi-way valve 14 to be in communication with the port J of the multi-way valve 14, control the port C of the multi-way valve 14 to be in communication with the port E of the multi-way valve 14, control the port D of the multi-way valve 14 to be in communication with the port E of the multi-way valve 14, control the port G of the multi-way valve 14 to be in communication with the port F of the multi-way valve 14, control the valve port M of the multi-inlet and one-outlet valve 11 to be in communication with the valve port N of the multi-inlet and one-outlet valve 11, and control the valve port O of the multi-way proportional valve 10 to be in communication with the valve port Q of the multi-way proportional valve 10. In this way, the first passenger compartment warming circuit, the electric drive and battery coolant circuit, and the first refrigerant circuit that are desired are formed.

Since the second electronic expansion valve 5 is not turned on, the battery cooler 6 only serves as a coolant path, and is therefore unable to perform heat exchange.

In this case, the compressor 1 sucks in a low-pressure and low-temperature gaseous refrigerant from the gas-liquid separator 7 and discharges a high-temperature and high-pressure gaseous refrigerant. After heat exchange with a heating medium in the water-cooled condenser 2, the refrigerant changes from a high-pressure and high-temperature gas to a high-pressure and medium-temperature liquid. The high-pressure and medium-temperature liquid passes through and is throttled by the first electronic expansion valve 3, in such a manner that the refrigerant changes from a high-pressure and medium-temperature liquid state to a low-pressure and low-temperature gaseous state. The refrigerant absorbs heat from a medium in the passenger compartment when passing through the evaporator core body 4, and then enters the gas-liquid separator 7. In this way, dehumidification of the passenger compartment is realized. In addition, the heating water pump 15 drives a heating liquid heated by the water-cooled condenser 2 to flow into the valve port O of the multi-way proportional valve 10 and flow out of the valve port Q of the multi-way proportional valve 10, flow into the valve port M of the multi-inlet and one-outlet valve 11 and flow out of the valve port N of the multi-inlet and one-outlet valve 11, and flow back to the heating water pump 15. In this way, a heat pump heating circuit is formed, which realizes warming and dehumidification of the passenger compartment. Also, the residual heat of the electric drive 13 is carried away by the coolant. The residual heat of the electric drive 13 flows through the port J and the port H of the multi-way valve 14, passes through the battery water pump 17 and the coolant passage of the battery cooler 6, flows through the port G and the port F of the multi-way valve 14, passes through the check valve 18, and reaches the battery pack 19, in such a manner that the residual heat of the electric drive 13 is stored using the heat capacity effect of the battery pack 19 (due to a large volume and a heat exchange plate of the battery pack 19, heat transfer between the residual heat of the electric drive 13 and the battery pack 19 can be realized through the heat exchange plate. Also, the battery pack 19 has a high density, making the battery pack 19 as an ideal heat capacity body).

In combination with FIG. 2, in this embodiment, when the warming demand of the user is the warming demand of the second preset level, actions A, B1, C, and D are executed. Specific control steps for executing actions A, B1, C, and D are to: control the heating water pump 15, the electric drive water pump 12, the battery water pump 17, the first electronic expansion valve 3, the second electronic expansion valve 5, and the compressor 1 to be turned on, control the port H of the multi-way valve 14 to be in communication with the port J of the multi-way valve 14, control the port C of the multi-way valve 14 to be in communication with the port E of the multi-way valve 14, control the port D of the multi-way valve 14 to be in communication with the port E of the multi-way valve 14, control the port F of the multi-way valve 14 to be in communication with the port G of the multi-way valve 14, control the valve port M of the multi-inlet and one-outlet valve 11 to be in communication with the valve port N of the multi-inlet and one-outlet valve 11, and control the valve port O of the multi-way proportional valve 10 to be in communication with the valve port P of the multi-way proportional valve 10. In this way, the first passenger compartment warming circuit, the electric drive and battery coolant circuit, the first refrigerant circuit, and the second refrigerant circuit that are desired are formed.

In this case, the compressor 1 sucks in the low-pressure and low-temperature gaseous refrigerant from the gas-liquid separator 7 and discharges the high-temperature and high-pressure gaseous refrigerant. After heat exchange with the heating medium in the water-cooled condenser 2, the refrigerant changes from a high-pressure and high-temperature gas to a high-pressure and medium-temperature liquid. A part of the high-pressure and medium-temperature liquid passes through and is throttled by the first electronic expansion valve 3, in such a manner that the refrigerant changes from a high-pressure and medium-temperature liquid state to a low-pressure and low-temperature gaseous state, absorbs heat from a medium in the passenger compartment while passing through the evaporator core body 4, and enters the gas-liquid separator 7. In this way, dehumidification of the passenger compartment is realized. The other part of the high-pressure and medium-temperature liquid passes through and is throttled by the second electronic expansion valve 5, in such a manner that the refrigerant changes from the high-pressure and medium-temperature liquid state to the low-pressure and low-temperature gaseous state. The refrigerant in the low-pressure and low-temperature gaseous state absorbs the residual heat of the electric drive 13 and the heat stored in the battery pack 19 at the battery cooler 6, and is therefore changed into the refrigerant in the low-pressure and medium-temperature gaseous state. The refrigerant in the low-pressure and medium-temperature gaseous state passes through the gas-liquid separator 7 for a gas-liquid separation, and returns to the compressor 1. For the compressor 1, since the refrigerant introduced into the compressor 1 is the low-pressure and medium-temperature gas, the corresponding high-temperature and high-pressure gas obtained through a compression of the compressor 1 has a higher temperature, resulting in more heat being transferred to the coolant at the water-cooled condenser 2. Therefore, recovery and utilization of the residual heat of the electric drive 13 and the heat stored in the battery pack 19 are realized. In this case, the heating water pump 15 drives a heating liquid heated by the water-cooled condenser 2 to flow into the valve port O of the multi-way proportional valve 10 and flow out of the valve port Q of the multi-way proportional valve 10, flow into the valve port M of the multi-inlet and one-outlet valve 11 and flow out of the valve port N of the multi-inlet and one-outlet valve 11, and flow back to the heating water pump 15. In this way, the heat pump heating circuit is formed, which realizes the heating and the dehumidification of the passenger compartment. Also, for the battery pack 19 in this case, since the heat stored in the battery pack 19 is absorbed by the battery cooler 6, a temperature of the coolant is lowered. In this case, the battery pack 19 starts to store the cooling energy. This part of cooling energy can be used for cooling the battery pack 19 where a rapid temperature increase occurs due to fast charging.

Further, in combination with FIG. 2, in this embodiment, when the warming demand of the user is the warming demand of the third preset level, action B2 or actions A and B2 are executed. Specific control steps for executing action B2 are to: control the heating water pump 15 and the electric hydronic heater 8 to be turned on, control the valve port M of the multi-inlet and one-outlet valve 11 to be in communication with the valve port N of the multi-inlet and one-outlet valve 11, and control the valve port O of the multi-way proportional valve 10 to be in communication with the valve port Q of the multi-way proportional valve 10. As a result, the second passenger compartment warming circuit that is desired is formed.

In this case, the heating water pump 15 drives the heating liquid to be heated by the electric hydronic heater 8. The heated heating liquid passes through the warm air core body 9 to heat the passenger compartment. In addition, for the battery pack 19 in this case, the electric drive water pump 12 and the battery water pump 17 may be selectively turned on based on whether the electric drive 13 has excess heat to be recovered, to form the above electric drive and battery coolant circuit.

The example of FIG. 2 reveals that the recovery of the residual heat of the electric drive 13 can be realized using the heat capacity effect of the battery pack 19. Further, when there is a need for utilization of the residual heat, the heat stored in the battery pack 19 is transferred to the water-cooled condenser 2 through the refrigerant to heat the coolant, and is ultimately used to heat the passenger compartment.

Of course, in this embodiment, if there exists only a scenario that the residual heat of the electric drive 13 is too much and needs to be recovered, it is sufficient to form only the electric drive and battery coolant circuit described above. However, once the residual heat of the electric drive 13 and the heat stored in the battery pack 19 need to be recovered, the second refrigerant circuit and the first refrigerant circuit must be formed simultaneously, for a reason that this part of heat absorbed by the refrigerant in the battery cooler 6 needs to find an outlet (which is the evaporator core body 4 in this embodiment and can be used for the dehumidification of the passenger compartment). Otherwise, if the refrigerant circuit keeps absorbing heat without releasing heat outwards, there is a problem of circuit damage due to excessive heat absorption of the refrigerant circuit.

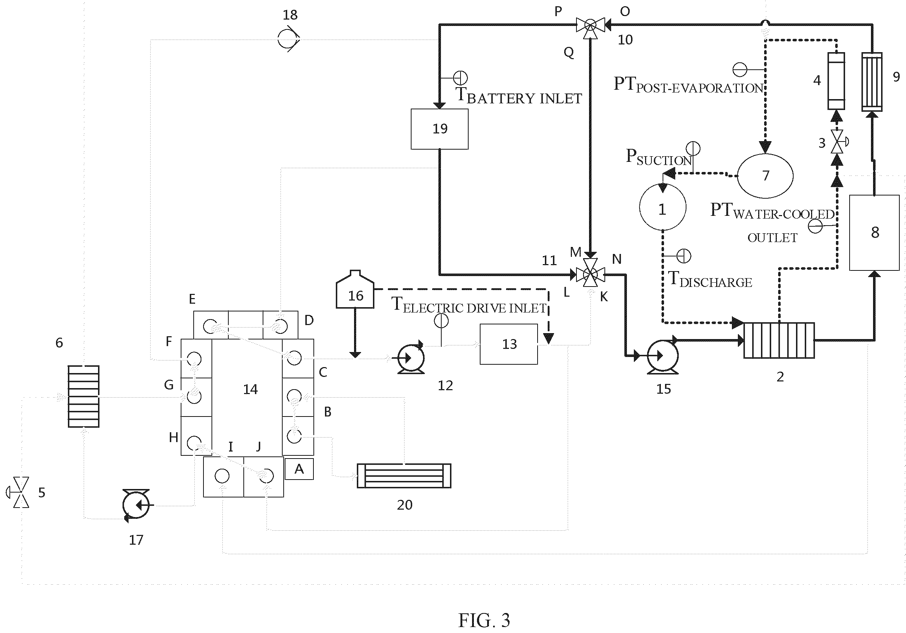

In addition, in this embodiment, the battery heating circuit for heating the battery pack 19 may also be formed based on a configuration illustrated in FIG. 3. A formation of the battery heating circuit needs to be in parallel with the passenger compartment warming circuit. In this case, when the battery pack 19 has a heating demand, actions B1, C, and G are executed. Action G is to turn on the battery heating circuit. Specific actions to turn on the battery heating circuit is to bring the valve port O of the multi-way proportional valve 10 to be in communication with the valve port P of the multi-way proportional valve 10, and to bring the valve port L of the multi-inlet and one-outlet valve 11 to be in communication with the valve port N of the multi-inlet and one-outlet valve 11. Formation principles of each of the passenger compartment warming circuit and the first refrigerant circuit are consistent with those described in the above description, and thus details thereof will be omitted here.

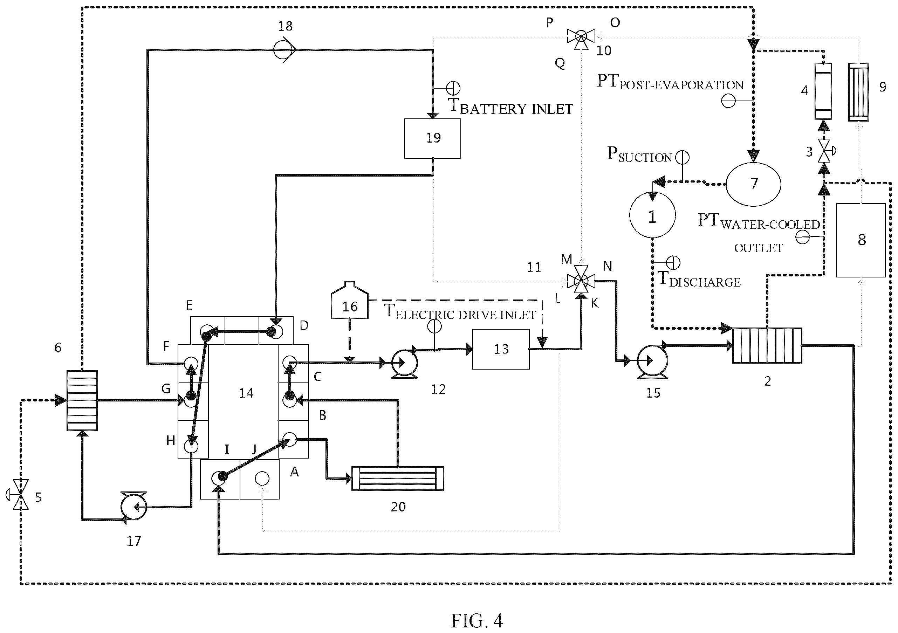

As illustrated in FIG. 4, in this embodiment, the above vehicle heat pump system may also be used for cooling. To cool the passenger compartment, the residual heat of the electric drive 13 needs to be used. Specifically, when the user demand is the cooling demand of the passenger compartment, whether the allowable power of the whole vehicle is greater than or equal to the requested cooling power is determined. When the allowable power of the whole vehicle is greater than or equal to the requested cooling power, actions C and E are executed. Action E is to turn on the electric drive coolant circuit. In a process of executing actions C and E, when the battery pack 19 has the cooling and cooling energy storage demand, actions D and F are executed. Action F is to turn on the battery coolant circuit. Specific steps for executing actions C and E are to: control the compressor 1, the first electronic expansion valve 3, and the electric drive water pump 12 to be turned on, control the valve port K of the multi-inlet and one-outlet valve 11 to be in communication with the valve port N of the multi-inlet and one-outlet valve 11, control the port I of the multi-way valve 14 to be in communication with the port A of the multi-way valve 14, and control the port B of the multi-way valve 14 to be in communication with the port C of the multi-way valve 14. Specific control steps for executing actions D and F are to: control the second electronic expansion valve 5 and the battery water pump 17 to be turned on, control the valve port H of the multi-way valve 14 to be in communication with the valve port E of the multi-way valve 14, control the valve port F of the multi-way valve 14 to be in communication with the valve port G of the multi-way valve 14, and control the valve port D of the multi-way valve 14 to be in communication with the valve port E of the multi-way valve 14. The compressor 11 sucks in the low-pressure and low-temperature gaseous refrigerant from the gas-liquid separator 77 and discharges the high-temperature and high-pressure gaseous refrigerant. After heat exchange with a cooling medium in the electric drive coolant circuit at the water-cooled condenser 2, the refrigerant changes from the high-pressure and high-temperature gas to the high-pressure and medium-temperature liquid. The high-pressure and medium-temperature liquid is partially throttled by the first electronic expansion valve 3 and flows through the evaporator core body 4 to cool the passenger compartment, and partially throttled by the second electronic expansion valve 5 and passes through the battery cooler 6 to cool the battery pack 19 through a cooling circuit of the battery pack 19. The refrigerant flows out of the evaporator core body 4 and the battery cooler 6 and enters the gas-liquid separator 7. The cycle repeats as the refrigerant is sucked back into the compressor 1.

The cooling medium of the battery coolant circuit is pumped out by the battery water pump 17, is cooled by the battery cooler 6, enters from the port G, flows out of the port F, returns to the multi-way valve 14 through the check valve 18 and the battery pack 19, enters from the port D and the port E, and then returns to the battery water pump 17. Therefore, while the battery pack 19 is cooled, the excess cooling energy generated by the refrigerant is stored. This part of stored cooling energy can be used to cool the battery pack 19 when a large temperature rise occurs during the fast charging of the battery pack 19, improving energy utilization.

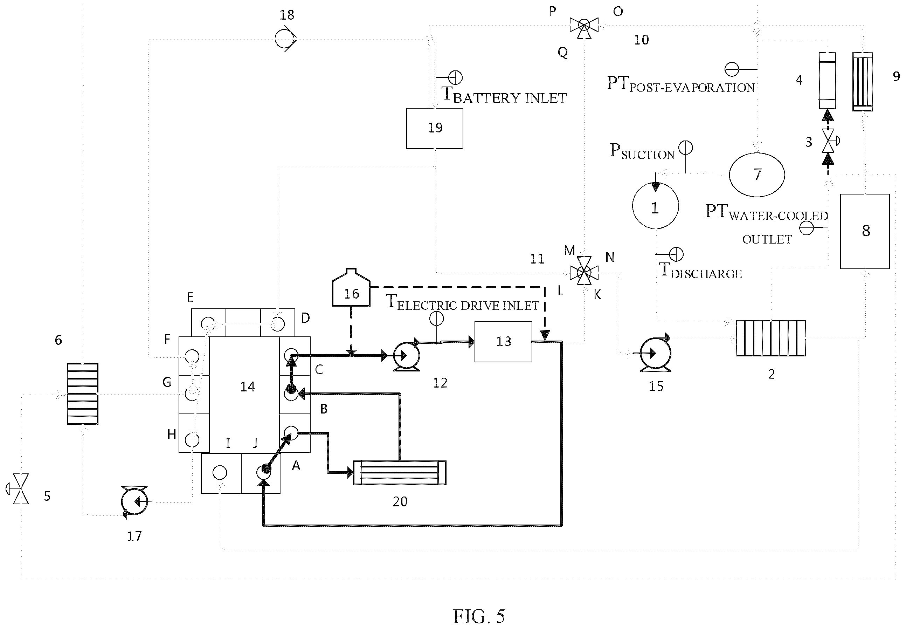

This embodiment mainly involves relevant circuits where the battery pack 19 participates as the heat capacity body. Of course, circuits that do not require participation of the battery pack 19 can also be formed in this embodiment. For example, in a scenario where the passenger compartment does not require heat generation but the electric drive 13 requires heat dissipation, as illustrated in FIG. 5, a heat dissipation circuit of the electric drive 13 is formed by the electric drive water pump 12, the electric drive 13, the port J and the port A of the multi-way valve 14, the heat dissipation device 20, and the port B and the port C of the multi-way valve 14. In this case, the electric drive 13 dissipates heat through the heat dissipation device 20. For example, in a scenario where the passenger compartment does not require heat generation but both the electric drive 13 and the battery require heat dissipation, a circuit for dissipating heat from the electric drive 13 and the battery by the heat dissipation device 20 can be formed. In this case, it is sufficient to bring the valve port B of the multi-way valve 14 to be in communication with the valve port F of the multi-way valve 14, bring the valve port J of the multi-way valve 14 to be in communication with the valve port A of the multi-way valve 14, and bring the valve port D of the multi-way valve 14 to be in communication with the valve port C of the multi-way valve 14.

Applications of the above vehicle heat pump system are not limited to these circuits and application scenarios involved in this embodiment.

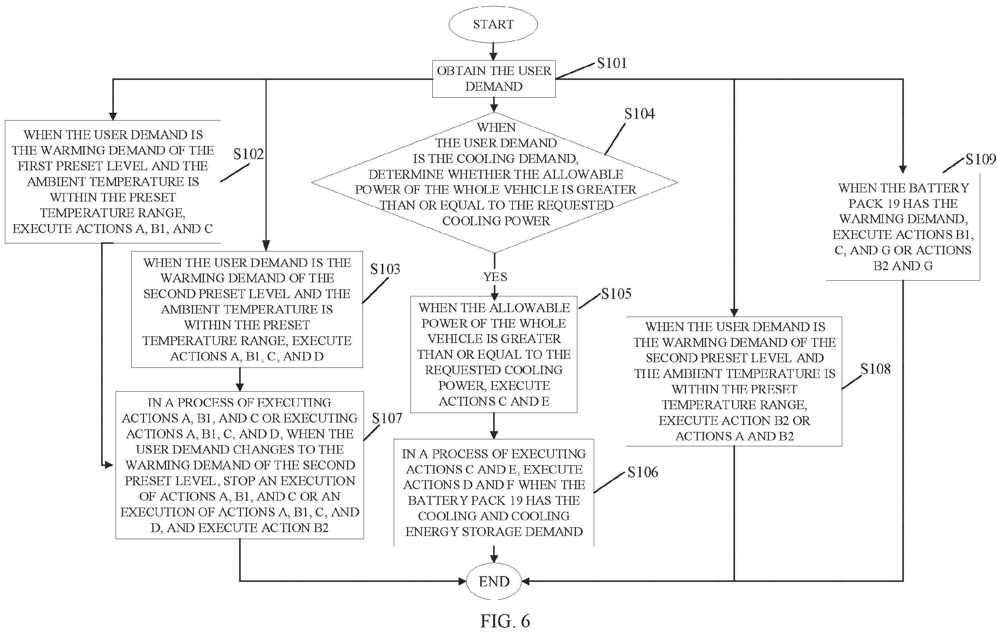

As illustrated in FIG. 6, a method for controlling the heat pump system is further provided according to the embodiments of the present disclosure. The method is applied in the above vehicle heat pump system and includes the following steps.

In step S101, obtain the user demand.

The user demand is derived from an instruction input by the user. The user can input an instruction that he or she wants to input by voice, in-vehicle display, physical on-vehicle hard keys, etc.

In step S102, when the user demand is the warming demand of the first preset level and the ambient temperature is within the preset temperature range, execute actions A, B1, and C.

The ambient temperature refers to a real-time temperature of an environment outside the vehicle, which is collected by a temperature sensor. The preset temperature range refers to a predetermined range of ambient temperatures in which there is a greater likelihood of requiring heating for the passenger compartment, e.g., a temperature range below 10°C.

In step S103, when the user demand is the warming demand of the second preset level and the ambient temperature is within the preset temperature range, execute actions A, B1, C, and D.

In step S104, when the user demand is the cooling demand, determine whether the allowable power of the whole vehicle is greater than or equal to the requested cooling power.

The allowable power of the whole vehicle and the requested cooling power are both power values directly collected.

In step S105, when the allowable power of the whole vehicle is greater than or equal to the requested cooling power, execute actions C and E. Action E is to turn on the electric drive coolant circuit.

In step S106, in a process of executing actions C and E, execute actions D and F when the battery pack 19 has the cooling and cooling energy storage demand. Action F is to turn on the battery coolant circuit.

In step S107, in a process of executing actions A, B1, and C or executing actions A, B1, C, and D, when the user demand changes to the warming demand of the third preset level, stop an execution of actions A, B1, and C or an execution of actions A, B1, C, and D, and execute action B2.

Action B2 is to turn on the second passenger compartment warming circuit.

The warming demand of the third preset level is higher than the warming demand of the first preset level and the warming demand of the second preset level.

In step S107, when the user demand is the warming demand of the third preset level and the ambient temperature is within the preset temperature range, execute action B2 or execute actions A and B2.

Action B2 is to turn on the second passenger compartment warming circuit.

In step S108, when the battery pack 19 has the heating demand, execute actions B1, C, and G or actions B2 and G.

Action B2 is to turn on the second passenger compartment warming circuit.

Action G is to turn on the battery heating circuit.

The above method of the present disclosure has the same technical effects as the above heat pump system. In other words, the battery pack 19 is used as the heat capacity body. When the residual heat of the electric drive 13 is not required for heating the passenger compartment, the heat capacity effect of the battery pack 19 is used to store the residual heat of the electric drive 13. When the residual heat of the electric drive 13 is required for heating the passenger compartment, residual heat stored in the battery pack 19 and the residual heat of the electric drive 13 are exchanged to the refrigerant through heat exchange, and then exchanged with the coolant in the passenger compartment warming circuit to heat the passenger compartment using the residual heat of the electric drive 13. While the residual heat of the electric drive 13 is used to heat the passenger compartment, the battery pack 19 can also store the cooling energy simultaneously. In addition, when the battery pack 19 is cooled, the refrigerant can be used to cool the battery pack 19 while storing the cooling energy. The stored cooling energy can be used to cool the battery pack 19 during fast charging.

A vehicle including the above vehicle heat pump system is further provided according to the embodiments of the present disclosure.

Although detailed explanations are given in connection with only a limited number of embodiments, the present disclosure is not limited to applications set forth in the specification and the embodiments. The present disclosure is applicable to a variety of fields suitable for the present disclosure. Additional modifications, additions, and substitutions can be easily realized by engineers and technicians familiar with the field. Therefore, without departing from the general concepts defined by the claims as attached and their equivalents, the present disclosure should not be regarded as being limited by the preceding description.

## Claims

1. A thermal management method for a vehicle heat pump system, the thermal management method comprising:
in response to determining that a passenger compartment has a warming demand of a first preset level but does not require residual heat of an electric drive, storing the residual heat of the electric drive using a heat capacity effect of a battery pack, and heating the passenger compartment using a refrigerant; and
in response to determining that the passenger compartment has a warming demand of a second preset level and requires the residual heat of the electric drive, transferring the residual heat of the electric drive stored in the battery pack and residual heat currently generated by the electric drive to the refrigerant, and heating the passenger compartment using the refrigerant,
wherein the warming demand of the second preset level is higher than the warming demand of the first preset level.

2. The thermal management method for the vehicle heat pump system according to claim 1, further comprising:
in response to determining that the passenger compartment has a cooling demand, storing excess cooling energy from the refrigerant using the heat capacity effect of the battery pack, and cooling the passenger compartment using the refrigerant.

3. The thermal management method for the vehicle heat pump system according to claim 1, further comprising:
in response to determining that the battery pack has a heating demand, heating the battery pack using the refrigerant.

4. The thermal management method for the vehicle heat pump system according to claim 1, further comprising:
in response to determining that the passenger compartment has a warming demand of a third preset level but does not require the residual heat of the electric drive, storing the residual heat of the electric drive using the heat capacity effect of the battery pack, and heating the passenger compartment using a heater,
wherein the warming demand of the third preset level is higher than the warming demand of the first preset level and the warming demand of the second preset level.

5. The thermal management method for the vehicle heat pump system according to claim 1, wherein said in response to determining that the passenger compartment has the warming demand of the first preset level but does not require the residual heat of the electric drive, storing the residual heat of the electric drive using the heat capacity effect of the battery pack, and heating the passenger compartment using the refrigerant comprises:
forming a first passenger compartment warming circuit, an electric drive and battery coolant circuit, and a first refrigerant circuit; and
thermally coupling the first refrigerant circuit to the first passenger compartment warming circuit, exchanging heat generated by the first refrigerant circuit to the first passenger compartment warming circuit to heat the passenger compartment, and transferring, via the electric drive and battery coolant circuit, the residual heat of the electric drive to the battery pack for storage.

6. The thermal management method for the vehicle heat pump system according to claim 1, wherein said in response to determining that the passenger compartment has the warming demand of the second preset level and requires the residual heat of the electric drive, transferring the residual heat of the electric drive stored in the battery pack and the residual heat currently generated by the electric drive to the refrigerant, and heating the passenger compartment using the refrigerant comprises:
forming a first passenger compartment warming circuit, an electric drive and battery coolant circuit, a first refrigerant circuit, and a second refrigerant circuit;
thermally coupling the first refrigerant circuit to the first passenger compartment warming circuit, thermally coupling the electric drive and battery coolant circuit to the second refrigerant circuit, and connecting the first refrigerant circuit and the second refrigerant circuit; and
exchanging, via the electric drive and battery coolant circuit and the second refrigerant circuit, the residual heat stored in the battery pack with the residual heat currently generated by the electric drive, transferring to the first refrigerant circuit via the second refrigerant circuit, and exchanging, via the first refrigerant circuit, heat generated by the first refrigerant circuit and heat absorbed by the first refrigerant circuit to the first passenger compartment warming circuit, for heating the passenger compartment.

7. The thermal management method for the vehicle heat pump system according to claim 2, wherein said in response to determining that the passenger compartment has the cooling demand, storing the excess cooling energy from the refrigerant using the heat capacity effect of the battery pack, and cooling the passenger compartment using the refrigerant comprises:
forming an electric drive coolant circuit, a first refrigerant circuit, a second refrigerant circuit, and a battery cooling circuit;
connecting the first refrigerant circuit and the second refrigerant circuit, thermally coupling the second refrigerant circuit to the battery cooling circuit, and thermally coupling the first refrigerant circuit to the electric drive coolant circuit; and
exchanging heat generated by the first refrigerant circuit to the electric drive coolant circuit to enable the refrigerant to be cooled, cooling the passenger compartment using a part of the cooled refrigerant, dissipating, via the electric drive coolant circuit, the heat exchanged to the electric drive coolant circuit, transferring the other part of the cooled refrigerant to the second refrigerant circuit, and exchanging, via the second refrigerant circuit, the other part of the cooled refrigerant to the battery cooling circuit, for storing the excess cooling energy by the battery pack.

8. The thermal management method for the vehicle heat pump system according to claim 3, wherein said in response to determining that the battery pack has the heating demand, heating the battery pack using the refrigerant comprises:
forming a battery heating circuit, a first passenger compartment warming circuit, and a first refrigerant circuit; and
connecting the first passenger compartment warming circuit and the battery heating circuit, thermally coupling the first passenger compartment warming circuit to the first refrigerant circuit, exchanging heat generated by the first refrigerant circuit to the first passenger compartment warming circuit, and transferring the heat generated by the first refrigerant to the battery heating circuit, for heating the battery.

9. The thermal management method for the vehicle heat pump system according to claim 4, wherein said in response to determining that the passenger compartment has the warming demand of the third preset level but does not require the residual heat of the electric drive, storing the residual heat of the electric drive using the heat capacity effect of the battery pack, and heating the passenger compartment using the heater comprises:
forming a second passenger compartment warming circuit and an electric drive and battery coolant circuit, heating, via the second passenger compartment warming circuit, the passenger compartment using heat generated by the second passenger compartment warming circuit, and transferring, via the electric drive and battery coolant circuit, the residual heat of the electric drive to the battery pack for storage.

10. A vehicle heat pump system for implementing the thermal management method according to any one of claims 1 to 9, the vehicle heat pump system comprising:
a first passenger compartment warming circuit;
a second passenger compartment warming circuit;
a battery coolant circuit;
an electric drive coolant circuit;
an electric drive and battery coolant circuit;
a first refrigerant circuit; and
a second refrigerant circuit, wherein:
the first passenger compartment warming circuit is coupled to the first refrigerant circuit and/or the second refrigerant circuit via a water-cooled condenser (2), the battery coolant circuit is coupled to the second refrigerant circuit via a battery cooler, the electric drive coolant circuit is coupled to the first refrigerant circuit and/or the second refrigerant circuit via the water-cooled condenser (2), and the electric drive and battery coolant circuit is coupled to the second refrigerant circuit via the battery cooler; and
the battery coolant circuit and the electric drive coolant circuit are allowed to coexist, the battery coolant circuit and the electric drive coolant circuit are not allowed to coexist with the electric drive and battery coolant circuit, the first refrigerant circuit and the second refrigerant circuit share a refrigerant passage of the water-cooled condenser (2), the electric drive coolant circuit and the passenger compartment warming circuit share a coolant passage of the water-cooled condenser (2), and the first passenger compartment warming circuit and the second passenger compartment warming circuit are not allowed to coexist.

11. The vehicle heat pump system according to claim 10, further comprising:
a battery heating circuit connected to the first passenger compartment warming circuit or the second passenger compartment warming circuit.

12. The vehicle heat pump system according to claim 11, further comprising:
a multi-way valve (14);
a multi-inlet and one-outlet valve (11);
a multi-way proportional valve (10), wherein:
the first passenger compartment warming circuit, the second passenger compartment warming circuit, the battery heating circuit, the battery coolant circuit, the electric drive coolant circuit, and the electric drive and battery coolant circuit are formed by switching control of a plurality of internal ports of the multi-way valve (14), switching control of a plurality of internal valve ports of the multi-inlet and one-outlet valve (11), switching control of a plurality of outlets of the multi-way proportional valve (10), and on-off control of an electric drive water pump (12), a heating water pump (15), and a battery water pump (17).

13. The vehicle heat pump system according to claim 12, wherein:
the multi-way valve (14) has 10 ports from port A to port J, the multi-inlet and one-outlet valve (11) has 4 valve ports from port K to port N, the port N being a water outlet, and the multi-way proportional valve (10) has 3 valve ports from port O to port Q;
the battery coolant circuit comprises a battery pack (19), the battery water pump (17), a coolant passage of the battery cooler (6), port D to port H of the multi-way valve (14), and a check valve (18); and
a water outlet of the battery pack (19) is in communication with the port D of the multi-way valve (14), the port D and the port E of the multi-way valve (14) are sequentially connected, the port E of the multi-way valve (14) is in communication with the port H of the multi-way valve (14), the port H of the multi-way valve (14) is in communication with a water inlet of the battery water pump (17), the coolant passage of the battery cooler (6) is in communication with a water outlet of the battery water pump (17) and the port G of the multi-way valve (14), the port G of the multi-way valve (14) is in communication with the port F of the multi-way valve (14), the port F of the multi-way valve (14) is in communication with a water inlet of the check valve (18), and the water inlet of the check valve (18) is in communication with a water inlet of the battery pack (19).

14. The vehicle heat pump system according to claim 13, wherein the electric drive coolant circuit comprises the electric drive water pump (12), the electric drive (13), the valve port L and the valve port O of the multi-inlet and one-outlet valve (11), the heating water pump (15), the coolant passage of the water-cooled condenser (2), the port A to the port C and the port I of the multi-way valve (14), and a heat dissipation device (20), and wherein:
a water inlet of the electric drive water pump (12) is in communication with the port C of the multi-way valve (14), a water outlet of the electric drive water pump (12) is in communication with a water inlet of the electric drive (13), a water outlet of the electric drive (13) is in communication with the valve port K of the multi-inlet and one-outlet valve (11), the valve port N of the multi-inlet and one-outlet valve (11) is in communication with a water inlet of the heating water pump (15), the coolant passage of the water-cooled condenser (2) is connected between and in communication with a water outlet of the heating water pump (15) and the port I of the multi-way valve (14), the port I of the multi-way valve (14) is in communication with the port A of the multi-way valve (14), the port A of the multi-way valve (14) is in communication with a water inlet of the heat dissipation device (20), a water outlet of the heat dissipation device (20) is in communication with the port B of the multi-way valve (14), and the port B of the multi-way valve (14) is in communication with the port C of the multi-way valve (14).

15. The vehicle heat pump system according to claim 13, wherein the electric drive and battery coolant circuit comprises the battery pack (19), the battery water pump (17), the coolant passage of the battery cooler (6), the port C to the port H and the port J of the multi-way valve (14), the check valve (18), the electric drive water pump (12), and the electric drive (13), and wherein:
the water outlet of the battery pack (19) is in communication with the port D of the multi-way valve (14), the port D and the port E of the multi-way valve (14) are sequentially connected, the port E of the multi-way valve (14) is in communication with the port C of the multi-way valve (14), a water inlet of the electric drive water pump (12) is in communication with the port C of the multi-way valve (14), a water outlet of the electric drive water pump (12) is in communication with a water inlet of the electric drive (13), a water outlet of the electric drive (13) is in communication with the port J of the multi-way valve (14), the port J of the multi-way valve (14) is in communication with the port H of the multi-way valve (14), the port H of the multi-way valve (14) is in communication with the water inlet of the battery water pump (17), the coolant passage of the battery cooler (6) is in communication with the water outlet of the battery water pump (17) and the port G of the multi-way valve (14), the port G of the multi-way valve (14) is in communication with the port F of the multi-way valve (14), the port F of the multi-way valve (14) is in communication with the water inlet of the check valve (18), and the water inlet of the check valve (18) is in communication with the water inlet of the battery pack (19).

16. The vehicle heat pump system according to claim 13, wherein:
the first passenger compartment warming circuit comprises the heating water pump (15), the coolant passage of the water-cooled condenser (2), a warm air core body (9), the valve port O and the valve port Q of the multi-way proportional valve (10), and the valve port M and the valve port N of the multi-inlet and one-outlet valve (11), wherein the valve port N of the multi-inlet and one-outlet valve (11) is in communication with a water inlet of the heating water pump (15), wherein the coolant passage of the water-cooled condenser (2) is connected between and in communication with a water outlet of the heating water pump (15) and a water inlet of the warm air core body (9), wherein a water outlet of the warm air core body (9) is in communication with the valve port O of the multi-way proportional valve (10), wherein the valve port O of the multi-way proportional valve (10) is in communication with the valve port Q of the multi-way proportional valve (10), wherein the valve port Q of the multi-way proportional valve (10) is in communication with the valve port M of the multi-inlet and one-outlet valve (11), and wherein the valve port M of the multi-inlet and one-outlet valve (11) is in communication with the valve port N of the multi-inlet and one-outlet valve (11); and
the second passenger compartment warming circuit comprises the first passenger compartment warming circuit and an electric hydronic heater (8), wherein the coolant passage of the water-cooled condenser (2) is connected between and in communication with the water outlet of the heating water pump (15) and a water inlet of the electric hydronic heater (8), and wherein the water inlet of the electric hydronic heater (8) is in communication with the water inlet of the warm air core body (9).

17. The vehicle heat pump system according to claim 16, wherein:
the battery heating circuit comprises the valve port O and the valve port P of the multi-way proportional valve (10), the valve port L and the valve port N of the multi-inlet and one-outlet valve (11), and the battery pack (19); and
the valve port N of the multi-inlet and one-outlet valve (11) is in communication with the water inlet of the heating water pump (15), the water outlet of the warm air core body (9) is in communication with the valve port O of the multi-way proportional valve (10), the valve port O of the multi-way proportional valve (10) is in communication with the valve port P of the multi-way proportional valve (10), the valve port P of the multi-way proportional valve (10) is in communication with the water inlet of the battery pack (19), the water outlet of the battery pack (19) is in communication with the valve port L of the multi-inlet and one-outlet valve (11), and the valve port L of the multi-inlet and one-outlet valve (11) is in communication with the valve port N of the multi-inlet and one-outlet valve (11).

18. The vehicle heat pump system according to claim 12, wherein:
the first refrigerant circuit comprises a compressor (1), the refrigerant passage of the water-cooled condenser (2), a first electronic expansion valve (3), an evaporator core body (4), and a gas-liquid separator (7) that are sequentially connected to form a closed-loop circuit; and
the second refrigerant circuit comprises the compressor (1), the refrigerant passage of the water-cooled condenser (2), a second electronic expansion valve (5), a refrigerant passage of the battery cooler (6), and the gas-liquid separator (7) that are sequentially connected to form a closed-loop circuit.

19. A vehicle, comprising the vehicle heat pump system according to any one of claims 10 to 18.
